(19) 

**Europäisches Patentamt**
**European Patent Office**
**Office européen des brevets**

(11) **EP 4 786 297 A1**

(12) **EUROPEAN PATENT APPLICATION**
published in accordance with Art. 153(4) EPC

(43) Date of publication:
05.08.2026 Bulletin 2026/32

(21) Application number: 23954057.8

(22) Date of filing: 20.12.2023

(51) International Patent Classification (IPC):
**B60W 40/10** (2012.01)

(86) International application number:
**PCT/CN2023/140216**

(87) International publication number:
**WO 2025/065925 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.09.2023 CN 202311243902**

(71) Applicant: **Anhui NIO Autonomous Driving Technology Co., Ltd.**
**Hefei, Anhui 230601 (CN)**

(72) Inventor: **SHI, Yafeng**
**Hefei, Anhui 230601 (CN)**

(74) Representative: **Vossius & Partner**
**Patentanwälte Rechtsanwälte mbB**
**Siebertstraße 3**
**81675 München (DE)**

(54) **METHOD AND SYSTEM FOR DETERMINING VEHICLE STATE, AND STORAGE MEDIUM**

(57) Disclosed is a method for determining a vehicle state. The vehicle state includes a rotational speed of a wheel, a longitudinal velocity of the center of mass of a vehicle, a lateral velocity of the center of mass of the vehicle, and a slope on which the vehicle is located. The method includes steps of: determining a rotational speed of the wheel at a current instant at least based on a stiffness and a rotational speed of the wheel at a previous instant, and an electric axle torque of an electric motor, where the rotational speed of the wheel at the current instant is used to correct forces on the wheel and a rotational speed of the wheel at a next instant; determining a longitudinal velocity of the center of mass and a lateral velocity of the center of mass of the vehicle at the current instant at least based on forces on the wheel at the current instant, where the forces on the wheel at the current instant are determined at least by the rotational speed of the wheel at the current instant; and determining a slope at the current instant at least based on the longitudinal velocity of the center of mass and the lateral velocity of the center of mass of the vehicle at the current instant, where the slope at the current instant is used to correct a longitudinal velocity of the center of mass and a lateral velocity of the center of mass of the vehicle at the next instant.

Determine a rotational speed of a wheel at a current instant at least based on a stiffness and a rotational speed of the wheel at a previous instant, and an electric axle torque of an electric motor, where the rotational speed of the wheel at the current instant is used to correct forces on the wheel and a rotational speed of the wheel at a next instant — S101

Determine a longitudinal velocity of the center of mass and a lateral velocity of the center of mass of a vehicle at the current instant at least based on forces on the wheel at the current instant, where the forces on the wheel at the current instant are determined at least by the rotational speed of the wheel at the current instant — S103

Determine a slope at the current instant at least based on the longitudinal velocity of the center of mass and the lateral velocity of the center of mass of the vehicle at the current instant, where the slope at the current instant is used to correct a longitudinal velocity of the center of mass and a lateral velocity of the center of mass of the vehicle at the next instant — S105

*FIG. 1*

EP 4 786 297 A1

## Description

### Technical Field

The present application relates to the field of vehicle control, and more particularly to a method for determining a vehicle state, a system for determining a vehicle state, and a computer-readable storage medium.

### Background Art

With the development of vehicle intelligence, more and more vehicles have been equipped with functions such as advanced driver assistance and stability control. Such functions impose higher requirements on the precision of vehicle states.

Currently, measurement units such as a global positioning system, an inertial measurement unit, a lidar, and image sensors are typically used to acquire vehicle state signals, and the acquired vehicle state signals are processed using a fusion algorithm to determine the vehicle states. However, high-precision measurement units come with high costs, while low-cost measurement units, due to their low precision, may result in increased observation noise, along with problems such as calibration errors and observation delays.

### Summary

In order to solve or at least alleviate one or more of the above problems, the following technical solutions are provided.

According to a first aspect of the present application, a method for determining a vehicle state is provided. The vehicle state includes a rotational speed of a wheel, a longitudinal velocity of the center of mass of a vehicle, a lateral velocity of the center of mass of the vehicle, and a slope on which the vehicle is located. The method includes steps of: determining a rotational speed of the wheel at a current instant at least based on a stiffness and a rotational speed of the wheel at a previous instant, and an electric axle torque of an electric motor, where the rotational speed of the wheel at the current instant is used to correct forces on the wheel and a rotational speed of the wheel at a next instant; determining a longitudinal velocity of the center of mass and a lateral velocity of the center of mass of the vehicle at the current instant at least based on forces on the wheel at the current instant, where the forces on the wheel at the current instant are determined at least by the rotational speed of the wheel at the current instant; and determining a slope at the current instant at least based on the longitudinal velocity of the center of mass and the lateral velocity of the center of mass of the vehicle at the current instant, where the slope at the current instant is used to correct a longitudinal velocity of the center of mass and a lateral velocity of the center of mass of the vehicle at the next instant.

In the method for determining a vehicle state according to an embodiment of the present application, the electric axle torque includes a driving torque and a braking torque.

In the method for determining a vehicle state according to an embodiment or any of the foregoing embodiments of the present application, determining the rotational speed of the wheel at the current instant at least based on the stiffness and the rotational speed of the wheel at the previous instant, and the electric axle torque of the electric motor includes: determining a rate of change of electric axle rotational speed at the previous instant based on the stiffness and the rotational speed of the wheel at the previous instant, and the electric axle torque of the electric motor; determining a predicted rotational speed of the wheel at the current instant based on the rate of change of electric axle rotational speed at the previous instant and the rotational speed of the wheel at the previous instant; and performing a weighted averaging operation on the predicted rotational speed of the wheel at the current instant and a measured rotational speed of the wheel at the current instant using a filtering algorithm, to determine the rotational speed of the wheel at the current instant.

In the method for determining a vehicle state according to an embodiment or any of the foregoing embodiments of the present application, the forces on the wheel at the current instant are obtained by steps of: determining a longitudinal slip ratio and a lateral slip ratio of the wheel at the current instant at least based on the rotational speed of the wheel at the current instant; and determining the forces on the wheel at the current instant at least based on the longitudinal slip ratio, the lateral slip ratio, and a stiffness of the wheel at the current instant.

In the method for determining a vehicle state according to an embodiment or any of the foregoing embodiments of the present application, determining the longitudinal velocity of the center of mass and the lateral velocity of the center of mass of the vehicle at the current instant at least based on the forces on the wheel at the current instant includes: determining a rate of change of longitudinal velocity of the center of mass and a rate of change of lateral velocity of the center of mass of the vehicle at the current instant at least based on the forces on the wheel at the current instant; determining the longitudinal velocity of the center of mass of the vehicle at the current instant at least based on the rate of change of longitudinal velocity of the center of mass of the vehicle at the current instant using a filtering algorithm; and determining the lateral velocity of the center of mass of the vehicle at the current instant at least based on the rate of change of lateral velocity of the center of mass of the vehicle at the current instant using an integration algorithm.

In the method for determining a vehicle state according to an embodiment or any of the foregoing embodiments of the present application, determining the longitudinal velocity of the center of mass of the vehicle at the current instant at least based on the rate of change of longitudinal velocity of the center of mass of the vehicle at the current instant using the filtering algorithm includes: determining a predicted longitudinal velocity of the center of mass of the vehicle at the current instant based on the rate of change of longitudinal velocity of the center of mass of the vehicle at the current instant and a longitudinal velocity of the center of mass of the vehicle at the previous instant; determining a longitudinal translational velocity and a lateral translational velocity of the wheel at the current instant based on the rotational speed of the wheel at the current instant and a longitudinal slip ratio of the wheel at the previous instant; determining an observed longitudinal velocity of the center of mass of the vehicle at the current instant based on vector processing of the longitudinal translational velocity and the lateral translational velocity of the wheel at the current instant; and performing a weighted averaging operation on the predicted longitudinal velocity of the center of mass of the vehicle at the current instant and the observed longitudinal velocity of the center of mass of the vehicle at the current instant using the filtering algorithm, to determine the longitudinal velocity of the center of mass of the vehicle at the current instant.

In the method for determining a vehicle state according to an embodiment or any of the foregoing embodiments of the present application, determining the lateral velocity of the center of mass of the vehicle at the current instant at least based on the rate of change of lateral velocity of the center of mass of the vehicle at the current instant using the integration algorithm includes: determining the lateral velocity of the center of mass of the vehicle at the current instant based on a sum of an integral of the rate of change of lateral velocity of the center of mass at the current instant over time and a lateral velocity of the center of mass of the vehicle at the previous instant.

In the method for determining a vehicle state according to an embodiment or any of the foregoing embodiments of the present application, the slope at the current instant is used to correct the longitudinal velocity of the center of mass and the lateral velocity of the center of mass of the vehicle at the next instant by: determining a rate of change of longitudinal velocity of the center of mass and a rate of change of lateral velocity of the center of mass of the vehicle at the next instant at least based on the slope and a yaw rate at the current instant; correcting the longitudinal velocity of the center of mass of the vehicle at the next instant at least based on the rate of change of longitudinal velocity of the center of mass of the vehicle at the next instant using the filtering algorithm; and correcting the lateral velocity of the center of mass of the vehicle at the next instant at least based on the rate of change of lateral velocity of the center of mass of the vehicle at the next instant using the integration algorithm.

In the method for determining a vehicle state according to an embodiment or any of the foregoing embodiments of the present application, the method further includes: determining a longitudinal translational correction velocity and a lateral translational correction velocity of the wheel at the current instant based on vector processing of the longitudinal velocity of the center of mass and the lateral velocity of the center of mass of the vehicle at the current instant; and correcting forces on the wheel, and a longitudinal slip ratio and a lateral slip ratio at the next instant using the longitudinal translational correction velocity and the lateral translational correction velocity of the wheel at the current instant.

In the method for determining a vehicle state according to an embodiment or any of the foregoing embodiments of the present application, determining the slope at the current instant at least based on the longitudinal velocity of the center of mass and the lateral velocity of the center of mass of the vehicle at the current instant includes: determining a longitudinal slope angle at the current instant at least based on the lateral velocity of the center of mass, the longitudinal velocity of the center of mass, and the rate of change of longitudinal velocity of the center of mass of the vehicle at the current instant; determining a bank angle at the current instant at least based on the lateral velocity of the center of mass, the longitudinal velocity of the center of mass, and the rate of change of lateral velocity of the center of mass of the vehicle at the current instant; and determining the longitudinal slope angle at the current instant and the bank angle at the current instant as the slope at the current instant.

In the method for determining a vehicle state according to an embodiment or any of the foregoing embodiments of the present application, the method further includes: processing the longitudinal slope angle at the current instant using a first low-pass filter; and processing the bank angle at the current instant using a second low-pass filter, where a cutoff frequency of the first low-pass filter and a cutoff frequency of the second low-pass filter are adjusted in response to the vehicle being in a transient operating condition or a steady-state operating condition.

In the method for determining a vehicle state according to an embodiment or any of the foregoing embodiments of the present application, adjusting the cutoff frequency of the first low-pass filter in response to the vehicle being in the transient operating condition or the steady-state operating condition includes: determining that the vehicle is in the transient operating condition or the steady-state operating condition based on one or more of a rate of change of longitudinal acceleration of the center of mass, a rate of change in the rate of change of longitudinal velocity of the center of mass, a rate of change of lateral velocity of the center of mass, and a rate of change of yaw rate; and adjusting the cutoff frequency of the first low-pass filter in response to determining that the vehicle is in the transient operating condition or the steady-state operating condition.

In the method for determining a vehicle state according to an embodiment or any of the foregoing embodiments of the present application, adjusting the cutoff frequency of the second low-pass filter in response to the vehicle being in the transient operating condition or the steady-state operating condition includes: determining that the vehicle is in the transient operating condition or the steady-state operating condition based on one or more of a rate of change of lateral acceleration of the center of mass, a rate of change in the rate of change of lateral velocity of the center of mass, a rate of change of longitudinal velocity of the center of mass, or a rate of change of yaw rate; and adjusting the cutoff frequency of the second low-pass filter in response to determining that the vehicle is in the transient operating condition or the steady-state operating condition.

According to a second aspect of the present application, a system for determining a vehicle state is provided. The system includes: a memory; a processor coupled to the memory; and a computer program stored on the memory and executed on the processor, where execution of the computer program causes the steps of the method for determining a vehicle state according to the first aspect of the present application to be performed.

According to a third aspect of the present application, a computer storage medium is provided. The computer storage medium includes instructions that, when executed, cause the steps of the method for determining a vehicle state according to the first aspect of the present application to be performed.

The solution for determining a vehicle state according to one or more embodiments of the present application, by means of the stiffness of the wheel, the electric axle torque of the electric motor, the forces on the wheel, and the slope, gives full consideration to lateral and longitudinal mechanical characteristics of the wheel, dynamic characteristics of the electric axle, and dynamic characteristics of the vehicle. This enables early prediction of the vehicle state, reducing or eliminating time lag in vehicle state data directly acquired using measurement units. In addition, closed-loop correction of the rotational speed of the wheel and closed-loop correction of the longitudinal velocity of the center of mass and the lateral velocity of the center of mass of the vehicle by the slope are formed. In this way, high-precision vehicle state data can be obtained with low latency, providing robust and reliable input for subsequent functions such as advanced driver assistance and stability control.

## Brief Description of the Drawings

The above-described and/or other aspects and advantages of the present application will become more apparent and comprehensible from the following description of various aspects with reference to the accompanying drawings, in which the same or similar units are denoted by the same reference numerals. In the accompanying drawings:

FIG. 1 is a flowchart of a method for determining a vehicle state according to one or more embodiments of the present application.
FIG. 2 is a block diagram of a closed-loop correction process of a rotational speed of a wheel according to one or more embodiments of the present application.
FIG. 3 is a block diagram of a closed-loop correction process of a velocity of the center of mass of a vehicle according to one or more embodiments of the present application.
FIG. 4 is a block diagram of a closed-loop correction process of a slope according to one or more embodiments of the present application.
FIG. 5 is a block diagram of a system for determining a vehicle state according to one or more embodiments of the present application.

## Detailed Description of Embodiments

The present application is described below more comprehensively with reference to the accompanying drawings in which example embodiments of the present application are illustrated. However, the present application may be implemented in different forms, and should not be construed as being limited to the embodiments provided herein. The embodiments as described above are provided above to make the disclosure herein comprehensive and complete, to more comprehensively convey the scope of protection of the present application to those skilled in the art.

In this specification, terms such as "include" and "comprise" indicate that in addition to the units and steps that are directly and explicitly described in the specification and claims, other units and steps that are not directly or explicitly described are not excluded from the technical solutions of the present application.

Unless otherwise specified, terms such as "first" and "second" are not used to indicate any order of units in time, space, size, etc., but are only used to distinguish between the units.

In the context of the present application, a vehicle state may include, but is not limited to, a rotational speed of a wheel, a longitudinal velocity of the center of mass and a lateral velocity of the center of mass of a vehicle, a slope on which the vehicle is located, etc. It should be noted that the solution for determining a vehicle state according to one or more embodiments of the present application may be for use in each wheel of the vehicle to determine a vehicle state for each wheel.

Various exemplary embodiments according to the present application will be described below in detail with reference to the accompanying drawings.

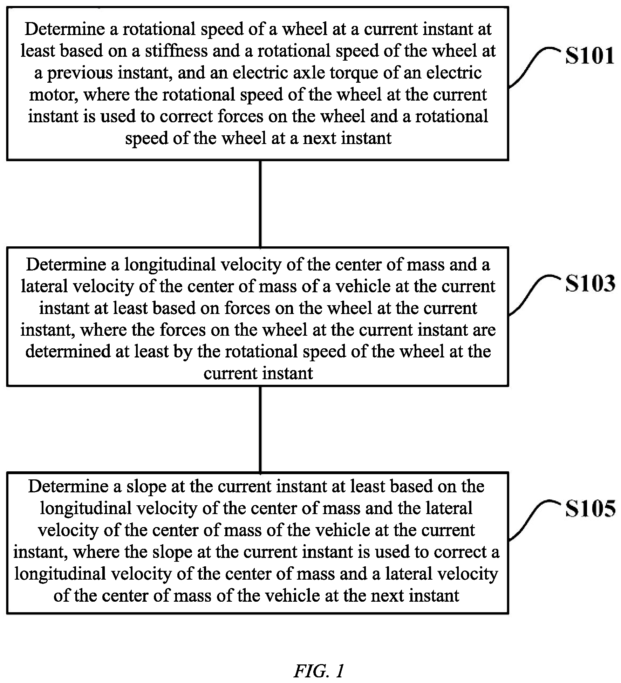

FIG. 1 is a flowchart of a method for determining a vehicle state according to one or more embodiments of the present application.

As shown in FIG. 1, in step S101, a rotational speed of a wheel at a current instant is determined at least based on a stiffness and a rotational speed of the wheel at a previous instant, and an electric axle torque of an electric motor, where the rotational speed of the wheel at the current instant is used to correct forces on the wheel and a rotational speed of the wheel at a next instant.

Optionally, the stiffness of the wheel may be obtained by querying a pre-calibrated database or by a pre-trained neural network model. Optionally, the electric axle torque may include a driving torque and a braking torque. For example, the driving torque may be calculated based on a voltage and a current of the electric motor, and the braking torque may be estimated based on a brake caliper pressure and a coefficient of friction.

Optionally, in step S101, a rate of change of electric axle rotational speed at the previous instant may be determined based on the stiffness and the rotational speed of the wheel at the previous instant, and the electric axle torque of the electric motor, a predicted rotational speed of the wheel at the current instant may be determined based on the rate of change of electric axle rotational speed at the previous instant and the rotational speed of the wheel at the previous instant, and a weighted averaging operation may be performed on the predicted rotational speed of the wheel at the current instant and a measured rotational speed of the wheel at the current instant using a filtering algorithm (for example, a Kalman filtering algorithm), to determine the rotational speed of the wheel at the current instant.

In one embodiment, the rate of change of electric axle rotational speed, w_dot, may be determined by the following formula (1):

$$\text{Twhl-FxWhlPred*r=J*w\_dot} \qquad \text{Formula (1)}$$

where Twhl represents a sum of the driving torque and the braking torque of the electric axle, FxWhlPred represents a longitudinal force on the wheel, r represents a wheel radius, and J represents a sum of moments of inertia of the wheel and the electric axle.

In one embodiment, the longitudinal force on the wheel, FxWhlPred, may be determined by the following formula (2):

$$\text{FxWhlPred=Fz*SlipLng*Cx} \qquad \text{Formula (2)}$$

where Fz represents a vertical load on the wheel, SlipLng represents a longitudinal slip ratio of the wheel, and Cx represents a longitudinal stiffness of the wheel. Optionally, the longitudinal slip ratio of the wheel, SlipLng, and the longitudinal stiffness of the wheel, Cx, may be determined at least based on the rotational speed of the wheel at the previous instant.

In one embodiment, the predicted rotational speed of the wheel at the current instant, wPred(k), may be determined by the following formula (3):

$$\text{wPred(k)=wCorr(k–1)+w\_dot*dT} \qquad \text{Formula (3)}$$

where k and k-1 represent the current instant and the previous instant, respectively, wCorr(k-1) represents the rotational speed of the wheel at the previous instant, w_dot represents the rate of change of electric axle rotational speed, and dT represents a derivative of an operation cycle.

In one embodiment, the weighted averaging operation may be performed by the following formula (4) on the predicted rotational speed of the wheel at the current instant, wPred(k), and the measured rotational speed of the wheel at the current instant, wMeas(k), using the Kalman filtering algorithm to determine the rotational speed of the wheel at the current instant, wCorr(k):

$$\text{wCorr(k)=wPred(k)*i+wMeas(k)*(1–i)} \qquad \text{Formula (4)}$$

where i and 1-i represent weights of the weighted averaging, $i \in (0, 1)$. For example, i may be set to a numerical value greater than 0.9 and less than 1.

According to one or more embodiments of the present application, the longitudinal slip ratio of the wheel, SlipLng, the longitudinal stiffness of the wheel, Cx, and the predicted rotational speed of the wheel at the current instant, wPred(k), may be determined at least based on the rotational speed of the wheel at the previous instant, wCorr(k-1). Optionally, at the next instant, the rotational speed of the wheel at the current instant determined in step S101 may be implemented as a closed-loop correction value and used as the rotational speed of the wheel at the previous instant to determine the longitudinal slip ratio of the wheel, SlipLng, the longitudinal stiffness of the wheel, Cx, and the predicted rotational speed of the wheel at the current instant, thereby improving the precision of the longitudinal slip ratio of the wheel, SlipLng, the longitudinal stiffness of the wheel, Cx, and the predicted rotational speed of the wheel at the current instant. According to one or more embodiments of the present application, a torque equilibrium equation as described in the above formula (1) is established using the electric axle torque of the electric motor and the forces on the wheel to determine the rate of change of electric axle rotational speed, and the rate of change of electric axle rotational speed is used to further predict the rotational speed of the wheel at the current instant, reducing or eliminating time lag in the rotational speed of the wheel directly acquired using measurement units. Furthermore, the rotational speed of the wheel at the current instant can be used to correct the forces on the wheel and the rotational speed of the wheel at the next instant (for example, refer to the above formula (3)), thereby forming closed-loop correction of the rotational speed of the wheel and further improving the precision of the thus determined rotational speed of the wheel.

In step S103, a longitudinal velocity of the center of mass and a lateral velocity of the center of mass of the vehicle at the current instant are determined at least based on forces on the wheel at the current instant, where the forces on the wheel at the current instant are determined at least by the rotational speed of the wheel at the current instant.

Optionally, the forces on the wheel at the current instant may include a longitudinal force and a lateral force, and may be obtained by the following steps: determining a longitudinal slip ratio and a lateral slip ratio of the wheel at the current instant at least based on the rotational speed of the wheel at the current instant; and determining the forces on the wheel at the current instant at least based on the longitudinal slip ratio, the lateral slip ratio, and a stiffness of the wheel at the current instant.

In one embodiment, the longitudinal slip ratio of the wheel at the current instant, SlipLng(k), may be determined by the following formula (5):

$$\text{SlipLng}(k)=(wCorr(k)*r-VxWhl(k–1))/\max(wCorr(k)*r, VxWhl(k–1)) \quad \text{Formula (5)}$$

where k and k-1 represent the current instant and the previous instant, respectively, wCorr(k) represents the rotational speed of the wheel at the current instant, r represents the wheel radius, and VxWhl(k-1) represents a longitudinal translational velocity of the wheel at the previous instant.

In one embodiment, the lateral slip ratio of the wheel at the current instant, SlipLat(k), may be determined by the following formula (6):

$$\text{SlipLat}(k)=VyWhl(k–1)/VxWhl(k–1) \quad \text{Formula (6)}$$

where k and k-1 represent the current instant and the previous instant, respectively, VyWhl(k-1) represents a lateral translational velocity of the wheel at the previous instant, and VxWhl(k-1) represents the longitudinal translational velocity of the wheel at the previous instant.

Optionally, the forces on the wheel at the current instant may include a longitudinal force and a lateral force. In one embodiment, a longitudinal force on the wheel at the current instant, FxWhl(k), may be determined by the following formula (7):

$$\text{FxWhl}(k)=Fz(k)*SlipLng(k)*Cx(k) \quad \text{Formula (7)}$$

where Fz(k) represents a vertical load on the wheel at the current instant, SlipLng(k) represents the longitudinal slip ratio of the wheel at the current instant, and Cx(k) represents a longitudinal stiffness of the wheel at the current instant.

In one embodiment, a lateral force on the wheel at the current instant, FyWhl(k), may be determined by the following formula (8):

$$\text{FyWhl}(k)=Fz(k)*MueY(k) \quad \text{Formula (8)}$$

where Fz(k) represents the vertical load on the wheel at the current instant, and MueY(k) represents a lateral coefficient of friction between the wheel and the ground at the current instant.

Optionally, in step S103, a rate of change of longitudinal velocity of the center of mass and a rate of change of lateral velocity of the center of mass of the vehicle at the current instant may be determined at least based on the forces on the wheel at the current instant that are determined by the rotational speed of the wheel at the current instant. The longitudinal velocity of the center of mass of the vehicle at the current instant is determined at least based on the rate of change of longitudinal velocity of the center of mass of the vehicle at the current instant using a filtering algorithm (for example, a Kalman filtering algorithm), and the lateral velocity of the center of mass of the vehicle at the current instant is determined at least based on the rate of change of lateral velocity of the center of mass of the vehicle at the current instant using an integration algorithm.

In one embodiment, determining the longitudinal velocity of the center of mass of the vehicle at the current instant at least based on the rate of change of longitudinal velocity of the center of mass of the vehicle at the current instant using the filtering algorithm may include: determining a predicted longitudinal velocity of the center of mass of the vehicle at the current instant based on the rate of change of longitudinal velocity of the center of mass of the vehicle at the current instant and a longitudinal velocity of the center of mass of the vehicle at the previous instant; determining a longitudinal translational velocity and a lateral translational velocity of the wheel at the current instant based on the rotational speed of the wheel at the current instant and a longitudinal slip ratio of the wheel at the previous instant; determining an observed longitudinal velocity of the center of mass of the vehicle at the current instant based on vector processing of the longitudinal translational velocity and the lateral translational velocity of the wheel at the current instant; and performing a weighted averaging operation on the predicted longitudinal velocity of the center of mass of the vehicle at the current instant and the observed longitudinal velocity of the center of mass of the vehicle at the current instant using the filtering algorithm, to determine the longitudinal velocity of the center of mass of the vehicle at the current instant.

In one embodiment, the predicted longitudinal velocity of the center of mass of the vehicle at the current instant, VxVehPred(k), may be determined by the following formula (9):

$$VxVehPred(k) = VxVehCorr(k-1) + dVxVeh/dT(k)*dT \qquad \text{Formula (9)}$$

where k and k-1 represent the current instant and the previous instant, respectively, VxVehCorr(k-1) represents the longitudinal velocity of the center of mass of the vehicle at the previous instant, dVxVeh/dT(k) represents the rate of change of longitudinal velocity of the center of mass of the vehicle at the current instant, and dT represents the derivative of the operation cycle.

In one embodiment, the observed longitudinal velocity of the center of mass of the vehicle at the current instant, VxVehMeas(k), may be determined by the following formula (10):

$$VxVehMeas(k) = f(VxWhl(k), VyWhl(k), YawRate(k), WhlStrAng(k)) \qquad \text{Formula (10)}$$

where VxWhl(k) represents the longitudinal translational velocity of the wheel at the current instant, VyWhl(k) represents the lateral translational velocity of the wheel at the current instant, YawRate(k) represents a yaw rate of the vehicle at the current instant, WhlStrAng(k) represents a steering angle of the wheel at the current instant, and f represents vector processing for converting the longitudinal translational velocity VxWhl(k) and the lateral translational velocity VyWhl(k) of the wheel at the current instant into the longitudinal velocity of the center of mass of the vehicle through translation and rotation.

In one embodiment, the longitudinal velocity of the center of mass of the vehicle at the current instant, VxVehCorr(k), may be determined by the following formula (11) using the Kalman filtering algorithm based on the results of formulas (9) and (10):

$$VxVehCorr(k) = VxVehMeas(k)*i + VxVehPred(k)*(1-i) \qquad \text{Formula (11)}$$

where i and 1-i represent weights of the weighted averaging, $i \in (0, 1)$. For example, i may be set to a numerical value greater than 0 and less than 0.2.

In one embodiment, determining the lateral velocity of the center of mass of the vehicle at the current instant at least based on the rate of change of lateral velocity of the center of mass of the vehicle at the current instant using the integration algorithm may include: determining the lateral velocity of the center of mass of the vehicle at the current instant based on a sum of an integral of the rate of change of lateral velocity of the center of mass at the current instant over time and a lateral velocity of the center of mass of the vehicle at the previous instant. In one embodiment, the lateral velocity of the center of mass of the vehicle at the current instant, VyVeh(k), may be determined by the following formula (12):

$$VyVeh(k) = VyVeh(k-1) + dVyVeh/dT(k)*dT \qquad \text{Formula (12)}$$

where k and k-1 represent the current instant and the previous instant, respectively, VyVeh(k-1) represents the lateral velocity of the center of mass of the vehicle at the previous instant, dVyVeh/dT(k) represents the rate of change of lateral velocity of the center of mass of the vehicle at the current instant, and dT represents the derivative of the operation cycle.

Optionally, in one or more embodiments of the present application, after the determining of the longitudinal velocity of the center of mass and the lateral velocity of the center of mass of the vehicle at the current instant, a longitudinal translational correction velocity and a lateral translational correction velocity of the wheel at the current instant may be determined based on vector processing of the longitudinal velocity of the center of mass and the lateral velocity of the center of mass of the vehicle at the current instant (that is, refer to the inverse transformation of the above formula (10)), and forces on the wheel, and a longitudinal slip ratio and a lateral slip ratio of the wheel at the next instant may be corrected using the longitudinal translational correction velocity and the lateral translational correction velocity of the wheel at the current instant.

In step S105, a slope at the current instant is determined at least based on the longitudinal velocity of the center of mass and the lateral velocity of the center of mass of the vehicle at the current instant, where the slope at the current instant is used to correct a longitudinal velocity of the center of mass and a lateral velocity of the center of mass of the vehicle at the next instant.

Optionally, in step S105, a longitudinal slope angle at the current instant may be determined at least based on the lateral velocity of the center of mass, the longitudinal velocity of the center of mass, and the rate of change of longitudinal velocity of the center of mass of the vehicle at the current instant, a bank angle at the current instant may be determined at least based on the lateral velocity of the center of mass, the longitudinal velocity of the center of mass, and the rate of change of lateral velocity of the center of mass of the vehicle at the current instant, and the longitudinal slope angle at the current instant and the bank angle at the current instant may be determined as the slope at the current instant.

In one embodiment, the longitudinal slope angle at the current instant, SlopAng(k), may be determined by the following formula (13):

$$g\sin(\mathrm{SlopAng}(k)) = \mathrm{Ax\_Sensor}(k) - d\mathrm{VxVeh}/dT(k) + \mathrm{VyVeh}(k)*\mathrm{YawRate}(k) \qquad \text{Formula (13)}$$

where g represents gravitational acceleration, Ax_Sensor(k) represents a measured value of longitudinal acceleration at the current instant, dVxVeh/dT(k) represents the rate of change of longitudinal velocity of the center of mass of the vehicle at the current instant, VyVeh(k) represents the lateral velocity of the center of mass of the vehicle at the current instant, and YawRate(k) represents the yaw rate of the vehicle at the current instant.

In one embodiment, the bank angle at the current instant, BankAng(k), may be determined by the following formula (14):

$$g\sin(\mathrm{BankAng}(k)) = \mathrm{Ay\_Sensor}(k) - d\mathrm{VyVeh}/dT(k) - \mathrm{VxVeh}(k)*\mathrm{YawRate}(k) \qquad \text{Formula (14)}$$

where g represents gravitational acceleration, Ay_Sensor(k) represents a measured value of lateral acceleration at the current instant, dVyVeh/dT(k) represents the rate of change of lateral velocity of the center of mass of the vehicle at the current instant, VxVeh(k) represents the longitudinal velocity of the center of mass of the vehicle at the current instant, and YawRate(k) represents the yaw rate of the vehicle at the current instant.

Optionally, after the determining of the longitudinal slope angle at the current instant and the bank angle at the current instant, low-pass filtering processing may be performed on the longitudinal slope angle at the current instant and the bank angle at the current instant. Optionally, a cutoff frequency of the low-pass filtering may be adjusted in response to the vehicle being in a transient operating condition or a steady-state operating condition. Alternatively, after the determining of the longitudinal slope angle at the current instant and the bank angle at the current instant, recursive least squares processing may be performed on the longitudinal slope angle at the current instant and the bank angle at the current instant. Optionally, a forgetting factor of the recursive least squares may be adjusted in response to the vehicle being in a transient operating condition or a steady-state operating condition.

In one embodiment, the longitudinal slope angle at the current instant may be processed using a first low-pass filter, and the bank angle at the current instant may be processed using a second low-pass filter, where a cutoff frequency of the first low-pass filter and a cutoff frequency of the second low-pass filter are adjusted in response to the vehicle being in the transient operating condition or the steady-state operating condition. In one embodiment, it may be determined that the vehicle is in the transient operating condition or the steady-state operating condition based on one or more of a rate of change of longitudinal acceleration of the center of mass, a rate of change in the rate of change of longitudinal velocity of the center of mass (which may be determined by a ratio of an amount of change in the rate of change of longitudinal velocity of the center of mass to a time taken for the amount of change), a rate of change of lateral velocity of the center of mass, or a rate of change of yaw rate, and the cutoff frequency of the first low-pass filter may be adjusted in response to determining that the vehicle is in the transient operating condition or the steady-state operating condition. In one embodiment, it may be determined that the vehicle is in the transient operating condition or the steady-state operating condition based on one or more of a rate of change of lateral acceleration of the center of mass, a rate of change in the rate of change of lateral velocity of the center of mass (which may be determined by a ratio of an amount of change in the rate of change of lateral velocity of the center of mass to a time taken for the amount of change), a rate of change of longitudinal velocity of the center of mass, or a rate of change of yaw rate, and the cutoff frequency of the second low-pass filter may be adjusted in response to determining that the vehicle is in the transient operating condition or the steady-state operating condition. Similarly, the forgetting factor of the recursive least squares may also be adjusted in a similar manner based on the operating condition of the vehicle.

It should be noted that the vehicle being in the transient operating condition may be understood as a steering wheel angle and/or a rate of change of vehicle speed exceeding a corresponding threshold, and the vehicle being in the steady-state operating condition may be understood as the steering wheel angle and/or the rate of change of vehicle speed not exceeding the corresponding threshold. For example, the threshold for the steering wheel angle may be set to about 1 degree, and the threshold for the rate of change of vehicle speed may be set to about 0.5 m/s$^2$. By the adjustment to the cutoff frequency of the low-pass filter or to the forgetting factor of the recursive least squares as described above, an update speed of the slope may be accelerated under the steady-state operating condition (that is, by decreasing a weight of a historical value of the slope and increasing a weight of a current value of the slope), and an update speed of the slope may be slowed down under the transient operating condition (that is, by increasing the weight of the historical value of the slope and decreasing the weight of the current value of the slope), thereby improving the precision of the slope.

The solution for determining a vehicle state according to one or more embodiments of the present application, by means of the stiffness of the wheel, the electric axle torque of the electric motor, the forces on the wheel, and the slope, gives full consideration to lateral and longitudinal mechanical characteristics of the wheel, dynamic characteristics of the electric axle, and dynamic characteristics of the vehicle. This enables early prediction of the vehicle state, reducing or eliminating time lag in vehicle state data directly acquired using measurement units. In addition, closed-loop correction of the rotational speed of the wheel and closed-loop correction of the longitudinal velocity of the center of mass and the lateral velocity of the center of mass of the vehicle by the slope are formed. In this way, high-precision vehicle state data can be obtained with low latency, providing robust and reliable input for subsequent functions such as advanced driver assistance and stability control.

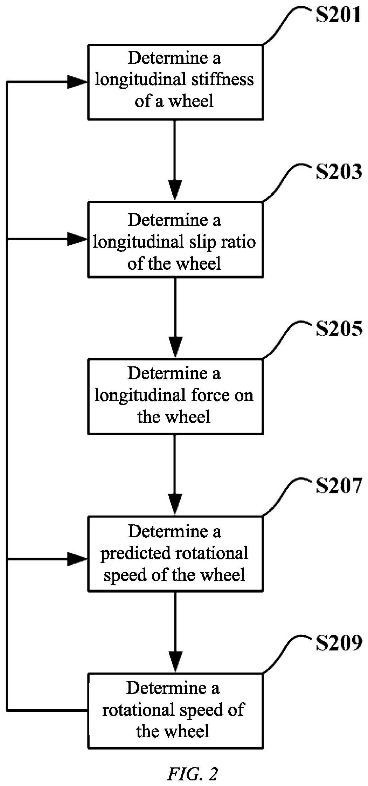

FIG. 2 is a block diagram of a closed-loop correction process of a rotational speed of a wheel according to one or more embodiments of the present application.

As shown in FIG. 2, in step S201, a longitudinal stiffness of the wheel is determined. Optionally, the longitudinal stiffness of the wheel may be obtained by querying a pre-calibrated database or by a pre-trained neural network model, where the pre-calibrated database or the pre-trained neural network model is generated or trained at least based on a rotational speed of the wheel.

In step S203, a longitudinal slip ratio of the wheel is determined. Optionally, a longitudinal slip ratio of the wheel at a current instant may be determined at least based on a rotational speed of the wheel at the current instant with reference to the above formula (5).

In step S205, a longitudinal force on the wheel is determined. Optionally, the longitudinal force on the wheel may be determined with reference to the above formula (2).

In step S207, a predicted rotational speed of the wheel is determined. Optionally, a predicted rotational speed of the wheel at the current instant may be determined with reference to the above formula (3).

In step S209, the rotational speed of the wheel is determined. Optionally, a weighted averaging operation may be performed on the predicted rotational speed of the wheel at the current instant and a measured rotational speed of the wheel at the current instant using a filtering algorithm with reference to the above formula (4), to determine the rotational speed of the wheel at the current instant.

After the determining of the rotational speed of the wheel at the current instant, at a next instant, the rotational speed of the wheel at the current instant that is determined in step S209 may be fed back to step S201, step S203, and step S207 as a rotational speed of the wheel at a previous instant, thereby enabling closed-loop correction of the longitudinal stiffness in step S201, the longitudinal slip ratio in step S203, and the predicted rotational speed of the wheel in step S207. Therefore, the precision of the longitudinal stiffness in step S201, the longitudinal slip ratio in step S203, and the predicted rotational speed of the wheel in step S207 can be improved.

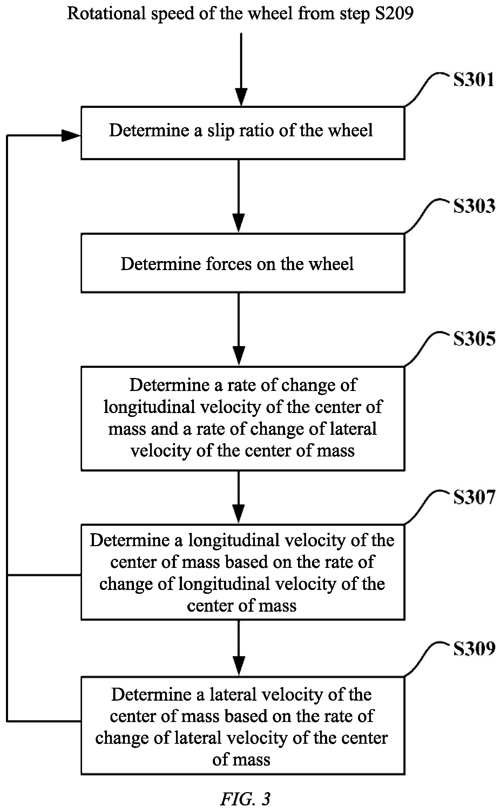

FIG. 3 is a block diagram of a closed-loop correction process of a velocity of the center of mass of a vehicle according to one or more embodiments of the present application.

As shown in FIG. 3, in step S301, a slip ratio of the wheel is determined. Optionally, the longitudinal slip ratio and a lateral slip ratio of the wheel at the current instant may be determined with reference to the above formula (5) and formula (6).

In step S303, forces on the wheel are determined. Optionally, a longitudinal force and a lateral force on the wheel at the current instant may be determined with reference to the above formula (7) and formula (8).

In step S305, a rate of change of longitudinal velocity of the center of mass and a rate of change of lateral velocity of the center of mass are determined.

In step S307, a longitudinal velocity of the center of mass is determined based on the rate of change of longitudinal velocity of the center of mass. Optionally, a longitudinal velocity of the center of mass of the vehicle at the current instant may be determined using a filtering algorithm with reference to the above formula (11).

In step S309, a lateral velocity of the center of mass is determined based on the rate of change of lateral velocity of the center of mass. Optionally, a lateral velocity of the center of mass of the vehicle at the current instant may be determined with reference to the above formula (12).

After the determining of the longitudinal velocity of the center of mass and the lateral velocity of the center of mass of the vehicle, at the next instant, vector processing may be performed on the longitudinal velocity of the center of mass and the lateral velocity of the center of mass of the vehicle that are determined in step S307 and step S309, respectively, to generate a longitudinal translational velocity and a lateral translational velocity of the wheel (that is, refer to the inverse transformation of the above formula (10)), and the generated longitudinal translational velocity and lateral translational velocity of the wheel may be fed back to step S301 as the longitudinal translational velocity and the lateral translational velocity of the wheel at the previous instant, thereby enabling closed-loop correction of the slip ratio of the wheel in step 301. Therefore, the precision of the slip ratio of the wheel in step S301 can be improved.

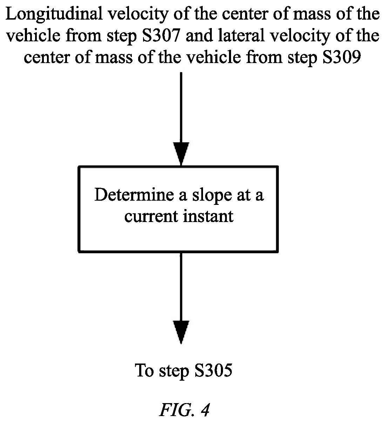

FIG. 4 is a block diagram of a closed-loop correction process of a slope according to one or more embodiments of the present application.

As shown in FIG. 4, a slope is determined at least based on the longitudinal velocity of the center of mass and the lateral velocity of the center of mass of the vehicle. Optionally, a longitudinal slope angle and a bank angle at the current instant may be determined with reference to the above formula (13) and formula (14). After the determining of the longitudinal slope angle and the bank angle, at the next instant, the longitudinal slope angle and the bank angle may be fed back to step S305 as the longitudinal slope angle and the bank angle at the previous instant to determine the rate of change of longitudinal velocity of the center of mass and the rate of change of lateral velocity of the center of mass of the vehicle at the current instant, thereby determining the longitudinal velocity of the center of mass and the lateral velocity of the center of mass of the vehicle at the current instant using the filtering algorithm and the integration algorithm, respectively. This enables closed-loop correction of the longitudinal velocity of the center of mass and the lateral velocity of the center of mass of the vehicle by the slope, thereby improving the precision of the longitudinal velocity of the center of mass and the lateral velocity of the center of mass of the vehicle.

For example, the bank angle may be used to determine a bank gravitational acceleration component, thereby determining the rate of change of lateral velocity of the center of mass of the vehicle, so that the lateral velocity of the center of mass of the vehicle is determined by means of the above formula (12). For example, the longitudinal slope angle may be used to determine a longitudinal slope gravitational acceleration component, thereby determining the rate of change of longitudinal velocity of the center of mass of the vehicle, so that a predicted longitudinal velocity of the center of mass of the vehicle is determined by means of the above formula (9), and the longitudinal velocity of the center of mass of the vehicle is determined using the filtering algorithm through the above formula (11).

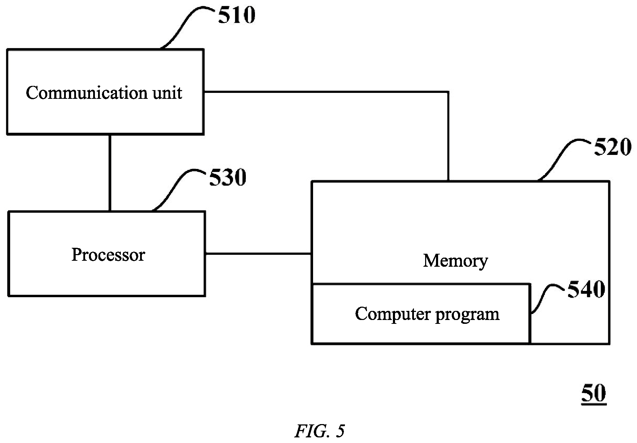

FIG. 5 is a block diagram of a system for determining a vehicle state according to one or more embodiments of the present application.

As shown in FIG. 5, a system 50 for determining a vehicle state includes a communication unit 510, a memory 520 (for example, a non-volatile memory such as a flash memory, a ROM, a hard disk drive, a magnetic disk, or an optical disc), a processor 530, and a computer program 540 stored on the memory 520 and executable on the processor 530.

The communications unit 510, as a communication interface, is configured to establish a communication connection between the task scheduling system 50 and an external device or network (e.g., a cloud or a mobile terminal).

The memory 520 stores the computer program 540 executable by the processor 530. In addition, the memory 520 may further store data (e.g., a rotational speed of a wheel, a longitudinal velocity of the center of mass of a vehicle, a lateral velocity of the center of mass of the vehicle, and a slope) generated when the processor 530 executes the computer program, and data or commands received externally via the communication unit 510.

The processor 530 is configured to execute the computer program 540 to implement the method for determining a vehicle state according to one or more embodiments of the present application.

The system for determining a vehicle state according to one or more embodiments of the present application, by means of the stiffness of the wheel, the electric axle torque of the electric motor, the forces on the wheel, and the slope, gives full consideration to lateral and longitudinal mechanical characteristics of the wheel, dynamic characteristics of the electric axle, and dynamic characteristics of the vehicle. This enables early prediction of the vehicle state, reducing or eliminating time lag in vehicle state data directly acquired using measurement units. In addition, closed-loop correction of the rotational speed of the wheel and closed-loop correction of the longitudinal velocity of the center of mass and the lateral velocity of the center of mass of the vehicle by the slope are formed. In this way, high-precision vehicle state data can be obtained with low latency, providing robust and reliable input for subsequent functions such as advanced driver assistance and stability control.

Various embodiments provided in the present application may be implemented by hardware, software, or a combination thereof where applicable. In addition, without departing from the scope of the present application, various hardware and/or software components described herein may be combined into composite components including software, hardware, or both where applicable. Without departing from the scope of the present application, various hardware and/or software components described herein may be split into sub-components including software, hardware, or both where applicable. In addition, where applicable, it is contemplated that software components can be implemented as hardware components, and vice versa.

Software (such as program code and/or data) in accordance with the present application may be stored on one or more computer storage media. It is also contemplated that the software identified herein can be implemented using one or more general-purpose or dedicated computers and/or computer systems, whether networked or otherwise. Where applicable, the steps described herein can be altered in order, combined into composite steps, and/or divided into sub-steps to provide the features described herein.

The embodiments and examples presented herein are provided to describe as adequately as possible embodiments according to the present application and specific applications thereof and thus enable those skilled in the art to implement and use the present application. However, those skilled in the art will know that the above descriptions and examples are provided merely for description and illustration. The descriptions are not presented to cover all aspects of the present application or limit the present application to the disclosed precise forms.

**Claims**

1. A method for determining a vehicle state, **characterized in that** the vehicle state comprises a rotational speed of a wheel, a longitudinal velocity of the center of mass of a vehicle, a lateral velocity of the center of mass of the vehicle, and a slope on which the vehicle is located, the method comprising steps of:

   determining a rotational speed of the wheel at a current instant at least based on a stiffness and a rotational speed of the wheel at a previous instant, and an electric axle torque of an electric motor, wherein the rotational speed of the wheel at the current instant is used to correct forces on the wheel and a rotational speed of the wheel at a next instant;
   determining a longitudinal velocity of the center of mass and a lateral velocity of the center of mass of the vehicle at the current instant at least based on forces on the wheel at the current instant, wherein the forces on the wheel at the current instant are determined at least by the rotational speed of the wheel at the current instant; and
   determining a slope at the current instant at least based on the longitudinal velocity of the center of mass and the lateral velocity of the center of mass of the vehicle at the current instant, wherein the slope at the current instant is used to correct a longitudinal velocity of the center of mass and a lateral velocity of the center of mass of the vehicle at the next instant.

2. The method according to claim 1, wherein the electric axle torque comprises a driving torque and a braking torque.

3. The method according to claim 1, wherein determining the rotational speed of the wheel at the current instant at least based on the stiffness and the rotational speed of the wheel at the previous instant, and the electric axle torque of the electric motor comprises:

   determining a rate of change of electric axle rotational speed at the previous instant based on the stiffness and the rotational speed of the wheel at the previous instant, and the electric axle torque of the electric motor;
   determining a predicted rotational speed of the wheel at the current instant based on the rate of change of electric axle rotational speed at the previous instant and the rotational speed of the wheel at the previous instant; and
   performing a weighted averaging operation on the predicted rotational speed of the wheel at the current instant and a measured rotational speed of the wheel at the current instant using a filtering algorithm, to determine the rotational speed of the wheel at the current instant.

4. The method according to claim 1, wherein the forces on the wheel at the current instant are obtained by steps of:

   determining a longitudinal slip ratio and a lateral slip ratio of the wheel at the current instant at least based on the rotational speed of the wheel at the current instant; and
   determining the forces on the wheel at the current instant at least based on the longitudinal slip ratio, the lateral slip ratio, and a stiffness of the wheel at the current instant.

5. The method according to claim 1, wherein determining the longitudinal velocity of the center of mass and the lateral velocity of the center of mass of the vehicle at the current instant at least based on the forces on the wheel at the current instant comprises:

determining a rate of change of longitudinal velocity of the center of mass and a rate of change of lateral velocity of the center of mass of the vehicle at the current instant at least based on the forces on the wheel at the current instant;

determining the longitudinal velocity of the center of mass of the vehicle at the current instant at least based on the rate of change of longitudinal velocity of the center of mass of the vehicle at the current instant using a filtering algorithm; and

determining the lateral velocity of the center of mass of the vehicle at the current instant at least based on the rate of change of lateral velocity of the center of mass of the vehicle at the current instant using an integration algorithm.

6. The method according to claim 5, wherein determining the longitudinal velocity of the center of mass of the vehicle at the current instant at least based on the rate of change of longitudinal velocity of the center of mass of the vehicle at the current instant using the filtering algorithm comprises:

determining a predicted longitudinal velocity of the center of mass of the vehicle at the current instant based on the rate of change of longitudinal velocity of the center of mass of the vehicle at the current instant and a longitudinal velocity of the center of mass of the vehicle at the previous instant;

determining a longitudinal translational velocity and a lateral translational velocity of the wheel at the current instant based on the rotational speed of the wheel at the current instant and a longitudinal slip ratio of the wheel at the previous instant;

determining an observed longitudinal velocity of the center of mass of the vehicle at the current instant based on vector processing of the longitudinal translational velocity and the lateral translational velocity of the wheel at the current instant; and

performing a weighted averaging operation on the predicted longitudinal velocity of the center of mass of the vehicle at the current instant and the observed longitudinal velocity of the center of mass of the vehicle at the current instant using the filtering algorithm, to determine the longitudinal velocity of the center of mass of the vehicle at the current instant.

7. The method according to claim 5, wherein determining the lateral velocity of the center of mass of the vehicle at the current instant at least based on the rate of change of lateral velocity of the center of mass of the vehicle at the current instant using the integration algorithm comprises:
determining the lateral velocity of the center of mass of the vehicle at the current instant based on a sum of an integral of the rate of change of lateral velocity of the center of mass at the current instant over time and a lateral velocity of the center of mass of the vehicle at the previous instant.

8. The method according to claim 5, wherein the slope at the current instant is used to correct the longitudinal velocity of the center of mass and the lateral velocity of the center of mass of the vehicle at the next instant by:

determining a rate of change of longitudinal velocity of the center of mass and a rate of change of lateral velocity of the center of mass of the vehicle at the next instant at least based on the slope and a yaw rate at the current instant;

correcting the longitudinal velocity of the center of mass of the vehicle at the next instant at least based on the rate of change of longitudinal velocity of the center of mass of the vehicle at the next instant using the filtering algorithm; and

correcting the lateral velocity of the center of mass of the vehicle at the next instant at least based on the rate of change of lateral velocity of the center of mass of the vehicle at the next instant using the integration algorithm.

9. The method according to claim 6 or 7, further comprising:

determining a longitudinal translational correction velocity and a lateral translational correction velocity of the wheel at the current instant based on vector processing of the longitudinal velocity of the center of mass and the lateral velocity of the center of mass of the vehicle at the current instant; and

correcting forces on the wheel, and a longitudinal slip ratio and a lateral slip ratio at the next instant using the longitudinal translational correction velocity and the lateral translational correction velocity of the wheel at the current instant.

10. The method according to claim 1, wherein determining the slope at the current instant at least based on the longitudinal velocity of the center of mass and the lateral velocity of the center of mass of the vehicle at the current instant comprises:

determining a longitudinal slope angle at the current instant at least based on the lateral velocity of the center of mass, the longitudinal velocity of the center of mass, and the rate of change of longitudinal velocity of the center of mass of the vehicle at the current instant;

determining a bank angle at the current instant at least based on the lateral velocity of the center of mass, the longitudinal velocity of the center of mass, and the rate of change of lateral velocity of the center of mass of the vehicle at the current instant; and

determining the longitudinal slope angle at the current instant and the bank angle at the current instant as the slope at the current instant.

11. The method according to claim 10, further comprising:

processing the longitudinal slope angle at the current instant using a first low-pass filter; and
processing the bank angle at the current instant using a second low-pass filter,
wherein a cutoff frequency of the first low-pass filter and a cutoff frequency of the second low-pass filter are adjusted in response to the vehicle being in a transient operating condition or a steady-state operating condition.

12. The method according to claim 11, wherein adjusting the cutoff frequency of the first low-pass filter in response to the vehicle being in the transient operating condition or the steady-state operating condition comprises:

determining that the vehicle is in the transient operating condition or the steady-state operating condition based on one or more of a rate of change of longitudinal acceleration of the center of mass, a rate of change in the rate of change of longitudinal velocity of the center of mass, a rate of change of lateral velocity of the center of mass, and a rate of change of yaw rate; and
adjusting the cutoff frequency of the first low-pass filter in response to determining that the vehicle is in the transient operating condition or the steady-state operating condition.

13. The method according to claim 11, wherein adjusting the cutoff frequency of the second low-pass filter in response to the vehicle being in the transient operating condition or the steady-state operating condition comprises:

determining that the vehicle is in the transient operating condition or the steady-state operating condition based on one or more of a rate of change of lateral acceleration of the center of mass, a rate of change in the rate of change of lateral velocity of the center of mass, a rate of change of longitudinal velocity of the center of mass, or a rate of change of yaw rate; and
adjusting the cutoff frequency of the second low-pass filter in response to determining that the vehicle is in the transient operating condition or the steady-state operating condition.

14. A system for determining a vehicle state, **characterized in that** the system comprises:

a memory;
a processor coupled to the memory; and
a computer program stored on the memory and executed on the processor, wherein execution of the computer program causes the method for determining a vehicle state according to any one of claims 1 to 13 to be performed.

15. A computer-readable storage medium, **characterized in that** the computer storage medium comprises instructions that, when executed, cause the method for determining a vehicle state according to any one of claims 1 to 13 to be performed.

Determine a rotational speed of a wheel at a current instant at least based on a stiffness and a rotational speed of the wheel at a previous instant, and an electric axle torque of an electric motor, where the rotational speed of the wheel at the current instant is used to correct forces on the wheel and a rotational speed of the wheel at a next instant /⌐ **S101**

Determine a longitudinal velocity of the center of mass and a lateral velocity of the center of mass of a vehicle at the current instant at least based on forces on the wheel at the current instant, where the forces on the wheel at the current instant are determined at least by the rotational speed of the wheel at the current instant /⌐ **S103**

Determine a slope at the current instant at least based on the longitudinal velocity of the center of mass and the lateral velocity of the center of mass of the vehicle at the current instant, where the slope at the current instant is used to correct a longitudinal velocity of the center of mass and a lateral velocity of the center of mass of the vehicle at the next instant /⌐ **S105**

*FIG. 1*

*FIG. 2*

Rotational speed of the wheel from step S209

```
                                                    ⌐ S301
┌──────────────────────────────────────┐
│     Determine a slip ratio of the wheel      │
└──────────────────────────────────────┘

                                                    ⌐ S303
┌──────────────────────────────────────┐
│       Determine forces on the wheel         │
└──────────────────────────────────────┘

                                                    ⌐ S305
┌──────────────────────────────────────┐
│          Determine a rate of change of          │
│   longitudinal velocity of the center of         │
│   mass and a rate of change of lateral          │
│      velocity of the center of mass             │
└──────────────────────────────────────┘

                                                    ⌐ S307
┌──────────────────────────────────────┐
│   Determine a longitudinal velocity of the       │
│   center of mass based on the rate of           │
│    change of longitudinal velocity of the        │
│              center of mass                      │
└──────────────────────────────────────┘

                                                    ⌐ S309
┌──────────────────────────────────────┐
│     Determine a lateral velocity of the         │
│   center of mass based on the rate of           │
│  change of lateral velocity of the center        │
│                of mass                          │
└──────────────────────────────────────┘
```

*FIG. 3*

Longitudinal velocity of the center of mass of the vehicle from step S307 and lateral velocity of the center of mass of the vehicle from step S309

Determine a slope at a current instant

To step S305

*FIG. 4*

FIG. 5

## INTERNATIONAL SEARCH REPORT

| International application No. |
| --- |
| **PCT/CN2023/140216** |

### A. CLASSIFICATION OF SUBJECT MATTER

B60W40/10(2012.01)i

According to International Patent Classification (IPC) or to both national classification and IPC

### B. FIELDS SEARCHED

Minimum documentation searched (classification system followed by classification symbols)

IPC:B60W

Documentation searched other than minimum documentation to the extent that such documents are included in the fields searched

Electronic data base consulted during the international search (name of data base and, where practicable, search terms used)

CNTXT, ENTXTC, CNKI, VEN: 蔚来, 施雅风, 坡度, 轮速, 车速, 扭矩, 力矩, 修正, 校正, 刚度, slope, speed, velocity, torque, revis+, stiffness

### C. DOCUMENTS CONSIDERED TO BE RELEVANT

| Category* | Citation of document, with indication, where appropriate, of the relevant passages | Relevant to claim No. |
| --- | --- | --- |
| PX | CN 116985825 A (ANHUI NIO AUTONOMOUS DRIVING TECHNOLOGY CO., LTD.) 03 November 2023 (2023-11-03) claims 1-15 | 1-15 |
| A | CN 109910905 A (TONGJI UNIVERSITY) 21 June 2019 (2019-06-21) description, paragraphs 66-154, and figures 1-2 | 1-15 |
| A | CN 112046487 A (SUZHOU AUTOMOTIVE RESEARCH INSTITUTE, TSINGHUA UNIVERSITY (WUJIANG) et al.) 08 December 2020 (2020-12-08) entire document | 1-15 |
| A | CN 111368424 A (BEIJING BAIDU NETCOM SCIENCE AND TECHNOLOGY CO., LTD.) 03 July 2020 (2020-07-03) entire document | 1-15 |
| A | CN 108960426 A (JILIN UNIVERSITY) 07 December 2018 (2018-12-07) entire document | 1-15 |
| A | US 2010131144 A1 (GM GLOBAL TECHNOLOGY OPERATIONS INC.) 27 May 2010 (2010-05-27) entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 May 2024** | **29 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/140216**

| Patent document cited in search report | | | Publication date (day/month/year) | Patent family member(s) | | | Publication date (day/month/year) |
|---|---|---|---|---|---|---|---|
| CN | 116985825 | A | 03 November 2023 | None | | | |
| CN | 109910905 | A | 21 June 2019 | None | | | |
| CN | 112046487 | A | 08 December 2020 | None | | | |
| CN | 111368424 | A | 03 July 2020 | US | 2021276539 | A1 | 09 September 2021 |
| | | | | US | 11827202 | B2 | 28 November 2023 |
| | | | | EP | 3876136 | A1 | 08 September 2021 |
| | | | | JP | 2021138363 | A | 16 September 2021 |
| | | | | JP | 7263415 | B2 | 24 April 2023 |
| | | | | KR | 20210111709 | A | 13 September 2021 |
| | | | | KR | 102524904 | B1 | 24 April 2023 |
| CN | 108960426 | A | 07 December 2018 | None | | | |
| US | 2010131144 | A1 | 27 May 2010 | None | | | |

Form PCT/ISA/210 (patent family annex) (July 2022)